# EUROPEAN PATENT APPLICATION

(11) **EP 4 685 451 A1**
(43) Date of publication of application: **28.01.2026**
(21) Application number: 24190756.7
(22) Date of filing: 24.07.2024
(51) Int. Cl.: G01N 1/04, G01N 1/42

(54) **SYSTEM FOR SAMPLING OF BIOLOGICAL TISSUE IN A LASER ABLATION SYSTEM**

(71) Applicant: Universitätsklinikum Hamburg-Eppendorf, 20246 Hamburg (DE); Universität Hamburg, 20148 Hamburg (DE)
(72) Inventor: Dr. Hahn, Jan, 20246 Hamburg (DE); Prof. Dr. Schlüter, Hartmut, 22529 Hamburg (DE); Dr. Fernandez-Cuesta, Irene, 22765 Hamburg (DE)
(74) Representative: RGTH

(57) **Abstract**

To provide a system and method for extracting a biological tissue sample with an improved sample quality, a system (100) for sampling of biological tissue (11) is proposed comprising a laser device (12) for extracting a biological tissue sample (10) from the biological tissue (11), in particular in the form of an aerosol, and comprising a catching device (13a, 13b, 13c) for catching the biological tissue sample (10) extracted by the laser device (12) and providing the biological tissue sample (10) to a preparation device (14) and/or an analysis device (16), wherein the catching device (13a, 13b, 13c) is configured to provide a liquid volume (20a, 20b, 20c) for condensing or dissolving the biological tissue sample (10) on or in the liquid volume (20a, 20b, 20c).

## Description

The project leading to this application has received funding from the European Research Council (ERC) under the European Union's Horizon 2020 research and innovation programme (grant agreement No 714073).

The invention relates to a system for sampling of biological tissue, a method for sampling of biological tissue using said system and a biological tissue sample obtained by said method.

From prior art methods for extracting a biological tissue sample from a biological tissue are known using an ablation laser. After the extraction of the tissue sample from the tissue the sample is prepared for further analysis. The sample is taken by irradiating the tissue, which causes the tissue to transform into an aerosol. The tissue aerosol contains all the molecules that were previously present in the tissue. In order to be able to analyze the molecules, the aerosol must be condensed and subjected to sample preparation steps that are adapted to the molecule classes or analytes.

In the conventional preparation of tissue samples for the analytical-chemical detection of defined target molecules or entire molecule classes (omics method), part of the tissue is removed and then homogenized in order to bring the analytes from the solid tissue into solution. Until now, this has been done mechanically using e.g. a ball mill or by grinding the sample. With all previous mechanical methods, the tissues are not dissolved completely. Insoluble tissue components always remain, the molecules of which are lost for subsequent analysis. In addition, already dissolved tissue molecules can bind to these insoluble tissue particles, which are then also lost for subsequent analysis. A further problem arises from the disruption of the cellular compartments. This releases enzymes which chemically convert other molecules in the tissue resulting in false negative and false positive results.

A special case is the time-consuming laser microdissection (laser capture microdissection, LCM), which is a microscopic examination of a tissue section in order to recognize cell areas of interest on the tissue section and then cut these out of the tissue. The excised cells can then be subjected to further biochemical analysis. The problems described above also exist with LCM, albeit to a somewhat lesser extent. The problem with LCM is the need to fix the tissue before making the tissue sections in order to preserve the tissue architecture and thus be able to clearly recognize the various histological areas. Fixation involves chemical cross-linking and thus denaturation of the proteins, so that their identification is much more difficult due to their derivatization. The analysis of intact proteins from fixed tissue using methods such as top-down mass spectrometry is therefore not possible. The analysis of metabolites and lipids is in most cases also not possible from LCM-derived samples, as these classes of molecules can be chemically altered by fixation and are lost during the necessary washing steps.

Furthermore, the condensation of aerosol in liquids is of great importance for the analysis of different classes of biomolecules, especially for the analysis of intact proteins. During condensation, which leads to drying of the tissue aerosol (e.g. when condensing on the glass fiber filter), the biomolecules quickly stick together so that they can no longer be dissolved.

It is an object of the invention to provide a system and method for extracting a biological tissue sample with an improved sample quality and optimal yield of tissue molecules.

The object of the invention is solved by a system for sampling of biological tissue, which is in particular part of an intact organism, comprising a laser device for extracting a biological tissue sample from the biological tissue, in particular in the form of an aerosol, and comprising a catching device for catching the biological tissue sample extracted by the laser device and providing the biological tissue sample to a preparation device and/or an analysis device, wherein the catching device is configured to provide a liquid volume or a volume of a frozen liquid for condensing or dissolving the biological tissue sample on or in the liquid volume or the volume of the frozen liquid.

The technical effect in the use of the system is that the tissue sample may be extracted from the tissue while maintaining a majority of its biological and chemical properties and, thus, maintaining the quality of the tissue sample. Therefore, improved results may be achieved in subsequent analysis of the tissue sample.

In particular, since the tissue sample is caught in a liquid volume drying out and/or sticking of the tissue sample to an object carrier, e.g. a glass slide, can advantageously be avoided. This effect is in particular advantageous for proteins in the tissue sample. Avoiding the drying of the tissue sample, in particular an aerosol, is also advantageous for other molecules because the formation of insoluble material by the molecules sticking together will not occur.

A liquid volume is defined as an amount of liquid. The liquid volume may be arranged on or at a holder device of the catching device. Furthermore, the liquid volume may be provided in free form, that is being arranged unbound to any holding object in the sampling zone as will be explained in further detail below. Furthermore, the liquid volume may be an aerosol.

Likewise a volume of frozen liquid is defined as an amount of liquid that is frozen. The frozen liquid volume may be provided on or at a holder device of the catching device. In the following, the term "liquid volume" will be used, however, for the embodiments described the liquid volume may also be frozen or an aerosol. Unless the context clearly indicates otherwise, the use of the term "liquid volume" is thus not to be construed as excluding a volume of liquid that is frozen or an aerosol.

The liquid volume in particular acts similar to an object carrier in the sense that the tissue sample is caught or collected for further analysis. The biological tissue, in particular the aerosol sample, may be transported in or on the liquid volume to the preparation or analysis device. However, the liquid volume may also be arranged on a holder device, such as an object carrier or a similar device. For the liquid volume to effectively and essentially non-destructively collect and catch the tissue sample, the liquid volume or a surface of the liquid volume is exposed to the surrounding where the extracted tissue sample is present after being extracted by the laser device.

Preferably, at least 30%, more preferably at least 50%, even more preferably at least 70%, of a total surface of the liquid volume are exposed to the free surrounding. In particular, the entire surface of the liquid volume is exposed to the free surrounding.

Preferably, the liquid volume is positioned relative to the laser beam of the laser device and the biological tissue such that the tissue sample rising up from the biological tissue comes into contact with the liquid volume.

Preferably, exactly one liquid volume or more than one liquid volume may be provided during one sampling process to catch the tissue sample. For example, two, three, four or more liquid volumes may be provided essentially simultaneously or subsequently during the sampling.

The liquid volume may be water or an aqueous solution, preferably an aqueous buffer solution, preferably comprising at least one reagent, in particular a triazole, in case of subsequent RNA analysis. The aqueous solution of the liquid volume may also contain organic solvents and / or other additives.

Preferably, the system comprises a liquid volume source for providing the liquid volume during the sampling process. The liquid volume source may comprise a liquid storage and means to provide the liquid in the desired amount. The liquid volume source may be connected with means to provide or transfer the liquid volume in the sampling zone, such as an ejector or an ultrasound field.

The term "condensing" means that the particles in the tissue sample are absorbed by or bound in the liquid volume, for example to the surface of the liquid volume or within the liquid volume. Condensing here may also mean catching or collecting a tissue sample that is present in the form of an aerosol as will be explained later. Condensing an aerosol in the liquid may also be described as agglomerating, accumulating, aggregating or precipitating the tissue sample or the aerosol in the liquid volume.

The term "dissolving" means that the molecules from the tissue sample, which may have dried during condensation, are dissolved in the liquid of the liquid volume.

Dissolving includes the formation of a suspension from the tissue sample and the liquid volume.

The catching of the tissue sample by means of condensing including drying on any surface and/or dissolving the tissue sample on or in the liquid may also be referred to as capturing, trapping, incorporating; absorbing or collecting the tissue sample on or in the liquid volume.

A tissue sample of an intact organism may be a tissue sample extracted from a living or dead organism, that is from a human or any species including plants.

The extraction of the tissue sample from the tissue may also referred to as laser ablation or conversion of solid tissue into an aerosol performed by the laser device.

The preparation device and analysis device may be combined into one device or separate devices. Preparation is in particular performed before analysis. The analysis device is preferably a mass spectrometer. Other bioanalytical devices like capillary electrophoresis and other types of electrophoresis, devices for RNA and DNA analysis or on-chip detection are included. The analysis may comprise analytical-chemical as well as immuno-chemical detection of defined target molecules or entire classes of molecules also referred to as Omics methods. The possible subsequent forms of analysis include proteomics, metabolomics, lipidomics, glycomics, transcriptomics and/or DNA analyses.

The term according to which the "catching device is configured to provide a liquid volume" is not to be construed as meaning that the catching device is limited to statically hold the liquid volume, e.g. in or on a carrier. Rather, the term encompasses that the catching device is configured to comprise a liquid volume, for example, a droplet, or to generate or accept a liquid volume, for example, a droplet or an aerosol.

Preferably, the system comprises a sample preparation device coupled to the catching device for preparing the biological tissue sample, wherein the sample preparation device comprises a microfluidic chip. The tissue sample is transferred to the preparation device while being arranged on or in the liquid volume. The microfluidic chip may have an opening through which the liquid volume with the tissue sample may enter or the liquid volume may be placed in the opening for catching the tissue sample or for dissolving or condensing the tissue sample after the latter has been caught in the catching device. The microfluidic chip may be coupled to the analysis device for further analysis of the tissue sample, wherein an interface may be provided for coupling the microfluidic chip to the analysis device.

Alternatively, to the microfluidic chip, a microwell plate with appropriate design may be provided for collecting the liquid volume with the tissue sample. The catching device may be combined with the microwell plate in an analogous manner as described with respect to the microfluidic chip.

Alternatively the catching device may comprise a capillary, that may be used for trapping the tissue sample. The catching device after trapping the tissue aerosol sample may be connected to the analysis device, in particular the microfluidic chip.

Preferably, the laser device comprises an infrared laser, in particular a NIRL (nanosecond infrared laser) or PIRL (picosecond infrared laser) or a UV (ultra violet) laser, in particular with a wavelength less than 200 nm. The system may comprise means for, in particular automatically, moving the laser device such that a predetermined voxel of the biological tissue is extracted. That is, the laser device is preferably movable along three perpendicular axes (X-Y-Z-axes).

Preferably the laser of the laser device has a wavelength of 193 nm for achieving a subcellular resolution. The laser may have a repetition rate of 1,5 kHz or 20 Hz depending on the conditions of the sampling process.

The catching device may be coupled or synchronized with the laser device such that the liquid volume is placed relative to the laser beam generated by the laser device. In particular, the catching device is placed in a constant distance relative to the focal spot of the laser beam. Preferably, also the liquid volume may be provided in an appropriate distance relative to the focal spot of the laser beam. The distance between the liquid volume and the focal spot may be varied according to the amount of aerosol to be extracted.

Preferably, the laser device is configured such that the biological tissue sample is extracted in the form of an aerosol. That is, the biological tissue is present in the form of a gas of distributed fine particles which may be in a liquid and/or solid state. The aerosol after being extracted by the laser device may rise up from the surface of the biological tissue where the aerosol may come into contact with the liquid volume. The tissue aerosol contains all the molecules that were previously in the tissue.

Irradiating tissue with the laser causes the tissue to evaporate cold. In a fraction of less than a second, for example below 1 µs, the tissue is transformed into an aerosol in which all the molecules of the tissue are present in dissolved form. The laser can therefore be used to simultaneously take a sample from the tissue and homogenize it. The latter is ideal for subsequent analysis of (almost) any kind of molecules. Even sensitive biomolecules remain intact with this type of soft sampling and homogenization.

The catching device may be provided in different forms depending on the way the liquid volume is to be provided. The catching device is in particular configured such that it provides the liquid volume in the sampling zone in a way that the liquid volume may come into contact with the extracted tissue sample. This may be achieved by either providing the liquid volume directly so that the free tissue sample is caught by contacting the liquid volume. It is however also possible that the tissue sample is collected in the catching device first without initially, that is directly, coming into contact with the liquid volume. Contact between the tissue sample and the liquid volume is established while the tissue sample is already present, that means held, in the catching device. Also, the latter case may be referred to as catching the tissue sample by condensing or dissolving the tissue sample in the liquid volume although the initial contact of the tissue sample with the catching device is not with the liquid volume.

Generally, the liquid volume may be provided in different forms or shapes which will be described in the following. The different embodiments may be applied individually or in combination, for example when more than one liquid volume is provided during one tissue sampling process.

Preferably, the liquid volume is at least one droplet or a liquid reservoir. The droplet may be provided in a free form or bound to an object. For example, the droplet may be hanging from a tip-shaped object or an object having a tip, such as a needle, a capillary, part of the microfluidic-chip or a syringe. By providing the liquid volume in the form of a droplet a large surface area that is exposed to the surrounding where the tissue sample to be caught is present may be provided for effectively capturing a large amount of the tissue sample. The droplet may have a size, that is a largest diameter, of between 1 mm and 5mm, preferably between 2 mm and 4 mm. For example, the diameter may be about 3 mm.

Preferably, the catching device is configured to move the droplet through a sampling zone of the system, wherein the droplet is preferably moved in a direction essentially parallel to a surface of the biological tissue and/or in a direction perpendicular to the direction of a laser beam of the laser device. In particular, the droplet is moved or shot through the sampling zone above the biological tissue where the extracted tissue sample is present towards a catching zone of the catching device or directly towards the preparation device or analysis device. To move the droplet the catching device preferably comprises an ejector from which the droplet is ejected into the sampling zone. The moving droplet may also be referred to as a jet droplet. In particular, the jet droplet may be a LAMA (Liquid Application Method for time-resolved Analyses) jet droplet.

The sampling zone is in particular a space in which the tissue sample is located after extraction by the laser device. The sampling zone is, thus, a zone or space that is located above the tissue during the sampling process. The components of the system, such as the laser device, the catching device, the preparation device and/or the analysis device are preferably located in or adjacent to the sampling zone. Also, the liquid volume is provided in the sampling zone for catching the tissue sample.

Preferably, the catching device is configured to position the droplet essentially stationarily in a sampling zone of the system, wherein the catching device is preferably configured to position the droplet in the sampling zone by means of ultrasonic waves. A field of ultrasonic waves may be generated that is configured such that the liquid volume is held at a certain position or is levitating in the free space. Thus, during the sampling process the droplet remains essentially stationary while the tissue sample is extracted from the tissue using the laser device. After the tissue sample has been caught by the liquid volume, the liquid volume may be collected from the sampling zone to further prepare and/or analyze the tissue sample.

Preferably the droplet is provided such that the droplet is hanging from a holding element. The holding element may have any form suitable for holding the droplet, for example the holding element may be a needle, a tip, a capillary, a tubing, a pipet-tip like element or a syringe. Alternatively, the droplet may be placed on top of a surface which may be arranged at the inlet of the preparation device.

Preferably the liquid volume is held or received in a liquid reservoir, in particular a sponge-like element, wherein the liquid reservoir is preferably arranged in the preparation device or an analysis device, in particular the microfluidic chip. The liquid volume is in particular held in the liquid reservoir such that the liquid may come into contact with the tissue sample extracted from the tissue. That is, the liquid reservoir is preferably open to the surrounding.

The liquid reservoir may preferably be a sponge-like element wherein the liquid volume may be absorbed by the sponge-like element. Due to the porous structure of the sponge-like element, the liquid volume is exposed to the surrounding and, thus, to the tissue sample in the sampling zone thereby advantageously providing a large contact area for the tissue sample to be caught by the liquid volume. The sponge-like element may be comprised of a gel.

The liquid reservoir may be arranged in an opening that may be positioned above the tissue, wherein the laser beam of the laser device hits the tissue at an angle relative to an axis extending between the opening and the tissue at a position where the sample is taken from the tissue. The opening may preferably be an opening of the preparation device, for example the microfluidic chip, or the analysis device.

The liquid reservoir may be a flat, in particular round, reservoir for holding the liquid volume. Furthermore, the liquid reservoir may be D-shaped with the straight edge being aligned and arranged adjacent to the edge of the microfluidic chip and the round portion of the edge narrowing towards the microfluidic chip to guide the tissue sample towards an opening, in particular a channel, of the microfluidic chip. A depth of the reservoir may be at least 10 µm. The reservoir may have a diameter, that is a largest diameter, of between 0.1 mm and 5 mm, preferably between 2 mm and 4 mm. For example, the diameter may be about 3 mm.

Furthermore, the catching device may, as an alternative to the sponge-like element holding the liquid volume described above, include a filter or a membrane on which the tissue sample is collected and subsequently brought into contact with the liquid volume from the liquid reservoir. In particular, the filter or membrane with the collected sample may be flushed with the liquid volume. The filter or membrane may be arranged on or in the analysis device, for example the microfluidic chip, in particular at an opening thereof.

Preferably the catching device is configured to move the liquid volume to an opening of a preparation device or an analysis device. Preferably, the movement is controllable in three dimensions, that is within the entire sampling area. The liquid volume may be moved while it is levitating in the sampling area, together with the holder element or together with the liquid reservoir. When the liquid volume is levitating the movement may be achieved by corresponding control of the ultrasonic waves. Alternatively, the liquid volume may be shot through the sample area towards and into the opening.

Preferably, the system comprises a catching zone for catching and freezing the biological tissue sample, wherein the system is configured to provide the liquid volume in the catching zone to dissolve the biological tissue sample in the liquid volume. The catching zone may be arranged on a plate-shaped element of the catching device.

The liquid volume may be provided in the catching zone in the liquid or in the frozen state while the extracted tissue sample is caught by the liquid volume. In case that the tissue sample is caught by an unfrozen liquid volume, freezing of the liquid volume comprising the tissue sample may be performed afterwards.

The freezing is in particular performed such that the tissue sample does not dry out. This advantageously maintains the sample quality. The freezing may precede the provision of the liquid volume. In this case the tissue sample is frozen without first being condensed or dissolved in the liquid volume. The liquid volume is then brought into contact with the tissue sample wherein the liquid is not frozen or preferably heated to defrost the tissue sample. The tissue sample is then dissolved in the liquid volume and transferred to further processing, for example to the preparation and/or analysis device.

Preferably, the system comprises an imaging system, in particular 3D-imaging system, for aligning the system relative to the biological tissue to be sampled and/or for controlling the movement of the laser device and/or controlling and/or documenting the success of tissue ablation. For aligning the system relative to the tissue, the catching device, the laser device, the preparation device and/or the analysis device is or are aligned relative to the tissue.

The imaging system may be an optical coherence tomography (OCT) system used to determine the topology of the biological tissue from which the tissue sample is to be extracted. A high-resolution camera may be present for lateral, that is parallel and/or perpendicular to a surface of the tissue, targeting of the tissue sample as well as a fluorescence or reflected light microscope or an imaging system with other label-free contrast mechanisms, for example PARS (Photo Acoustic Remote Sensing). The imaging system advantageously helps at extracting also very small tissue samples from specific areas of the tissue. The tissue can also be a part of a small intact organism like a fruit fly or a zebrafish.

Preferably, the laser device is configured to emit laser pulses, wherein the catching device is synchronized with the laser device such that one liquid volume may be provided for each laser pulse. Preferably, several laser pulses and several liquid volumes may be provided during one sampling process. This allows to obtain a larger amount of tissue for the tissue sample. The tissue sample may be composed of the several tissue sample parts caught by the individual liquid volumes.

The provision of the liquid volume or liquid volumes is synchronized with the radiation of the laser beam with respect to timing and/or positioning of the liquid volume or liquid volumes relative to the laser beam.

A control device and/or a control software may be provided for connecting and/or controlling the devices of the system. It may control the hardware, that is at least the laser device, the catching device, the liquid volume source and/or the imaging device, and transfers the image space, that is the images obtained by the imaging system, to the ablation space, that is the space where the sampling takes place, in particular the sampling zone.

Overall, a modular structure is aimed for in order to enable the use of different technical components. The technical components are in particular the laser device, the catching device, liquid volume source, the imaging device, the preparation device, an interface for connecting the preparation device to an analysis device and/or the analysis device.

The object of the invention is furthermore solved by a method for sampling of biological tissue using a system with the aforementioned features, comprising the steps of:
- extracting the biological tissue sample from the biological tissue using the laser device,
- catching the biological tissue sample by means of the catching device, and
- providing the biological tissue sample to the preparation device and/or the analysis device.

Preferably, images, in particular two-dimensional or three-dimensional, images of the tissue to be sampled are taken before the extraction step.

Preferably, the area of the tissue of interest for sampling are identified from the images. This may include identifying one or several areas of interest. A three-dimensional or a two-dimensional map of the tissue may be generated from the images.

Preferably, the laser is guided by the map to the areas of interest to perform the tissue sample extraction.

In addition, the object of the invention is solved by a biological tissue obtained by the aforementioned method.

The invention is explained in more detail below with reference to exemplary embodiments. It shows in
- Fig. 1: an overview of a system for sampling of biological tissue,
- Fig. 2: a first embodiment of a catching device providing a liquid volume,
- Fig. 3: a second embodiment of a catching device providing a liquid volume,
- Fig. 4: a third embodiment of a catching device providing a liquid volume,
- Fig. 5: a fourth embodiment of a catching device providing a liquid volume,
- Fig. 6: a fifth embodiment of a catching device providing a liquid volume,
- Fig. 7: a sixth embodiment of a catching device providing a liquid volume,
- Fig. 8: a seventh embodiment of a catching device providing a liquid volume, and
- Fig. 9: a schematic diagram of method steps for sampling of biological tissue.

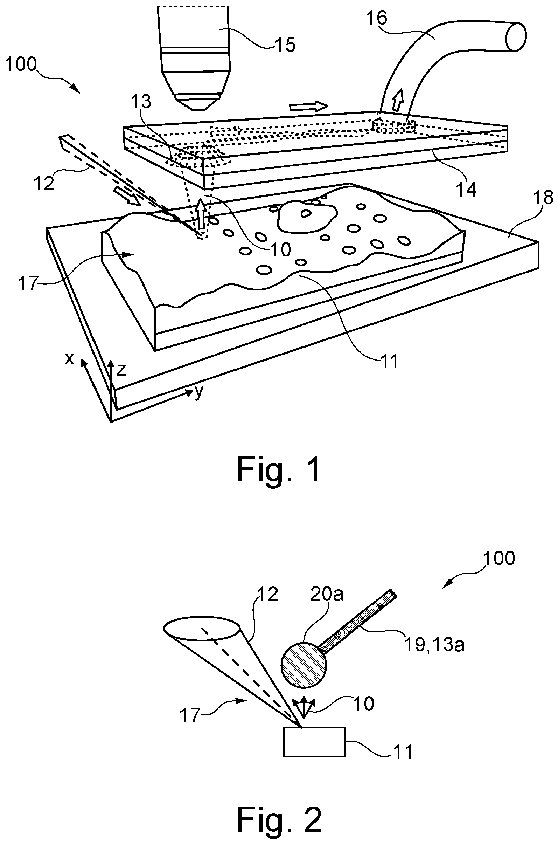

Figure 1 shows an overview of a system 100 for sampling of a biological tissue sample 10 from biological tissue 11. The system 100 comprises a laser device 12 for extracting of the biological tissue sample 10 from the biological tissue 11 by cold evaporation forming an aerosol (plume). The laser beam of the laser device 12 is moved in a sampling zone 17 over a region of interest from which the biological tissue sample 10 is to be extracted. The biological tissue sample 10 will be extracted in the form of an aerosol (plume) which will rise up from the surface of the biological tissue 11. The dark area (area of interest) may be a diseased part of the tissue.

In order to maintain the quality of the extracted tissue sample 10 the tissue sample 10 is caught using a catching device 13. In Figure 1 the catching device 13 is only schematically shown and the catching device 13 may have different configurations as will further be described in reference to the following figures. All configurations have in common that a liquid volume is provided in which the tissue sample 10 is condensed or dissolved. In Figure 1, the catching device 13 is arranged at an opening of a preparation device 14. The preparation device 14 is a microfluidic chip for preparing the tissue sample 10 for further analysis. The preparation device 14 is coupled to an interface, coupled to an analysis device 16 to which the prepared tissue sample 10 is transferred for analysis. The analysis device 16 may be a mass spectrometer.

For monitoring the sampling process an imaging device 15 is provided which allows imaging of the region of interest in the biological tissue 11, the control and documentation of the tissue area which is ablated, as well as the components of the system 100, in particular the laser device 12. Furthermore, the tissue 11 may be placed on a stage 18 that can be moved in X-, Y- and Z-direction so that the tissue 11 is moved relative to the laser beam of the laser device 12.

Figure 2 shows a first embodiment of the catching device 13a wherein the catching device 13a provides a liquid volume 20a for catching the tissue sample 10 from the biological tissue 10. In this embodiment, the liquid volume 20a is provided in the form of a droplet that is provided hanging from a holder element 19 which is part of the catching device 13a in the sampling zone 17. The droplet is provided in the sampling zone 17 to catch the tissue sample 10 by condensing the tissue sample 10 which may be present in the form of an aerosol on the droplet. The droplet with the condensed tissue sample 10 is then transferred to subsequent preparation and analysis, e.g. performed on the chip (Fig. 1, 14) .

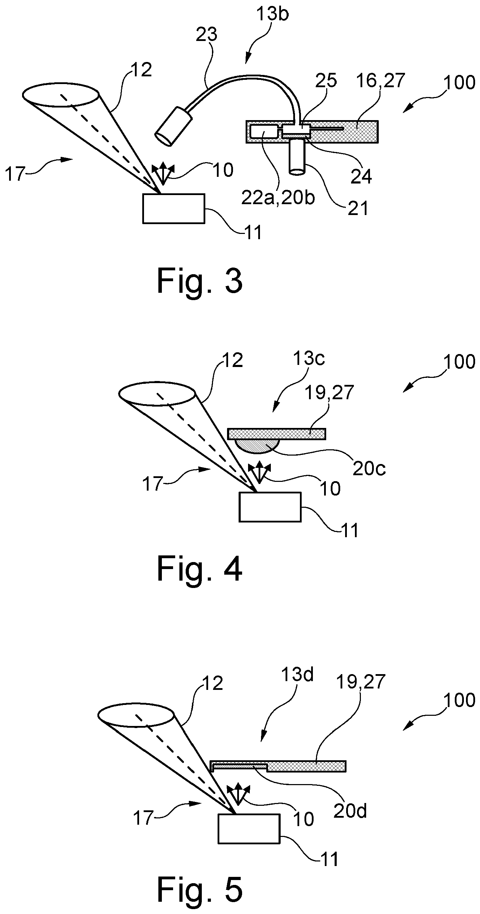

Figure 3 shows a second embodiment of the catching device 13b wherein the catching device 13b provides the liquid volume 20b in a liquid reservoir 22a. The liquid reservoir 22a is arranged on an analysis device which may be a microfluidic chip 27. Furthermore, the catching device 13b comprises a pumping element 23 including a vacuum pump 21 which pumps the tissue sample 10 extracted by the device from the tissue into the microfluidic chip 27 onto a filter 24 which may be a glass fiber filter arranged inside a chamber 25 inside the microfluidic chip 27. The tissue sample is then dissolved in the liquid volume 20b which is provided from the liquid reservoir 22a.

Figure 4 shows a third embodiment of the catching device 13c wherein the catching device 13c comprises the liquid volume 20c in the form of a droplet hanging from a holder element 19, which here is the microfluidic chip 27 or an inlet thereof. Instead of the microfluidic chip 27 also a carrier 26 may be provided.

Figure 5 shows a fourth embodiment of the catching device 13d which differs from the catching device 13c of figure 4 in that the liquid volume 20d is provided in a flat liquid reservoir at the inlet of the microfluidic chip 27 or the carrier 26.

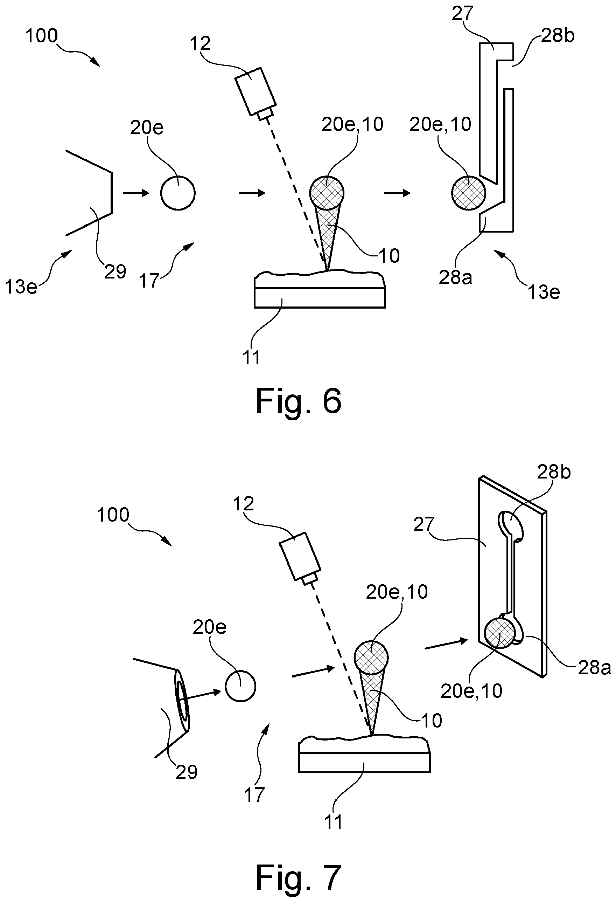

Figures 6 shows a fifth embodiment of a catching device 13e. The catching device 13e comprises an ejector 29 for ejecting a liquid volume 20e in the form of a droplet that is shot through the sampling zone 17 towards an inlet 28a of a microfluidic chip 27. During the movement through the sampling zone 17 the droplet catches the tissue sample 10 and the liquid volume 20e together with the tissue sample 10 is moved to the microfluidic chip 27 where the tissue sample 10 is prepared and provided to further analysis at an interface at the outlet 28b of the microfluidic chip 27. Figure 7 shows a sixth embodiment of a catching device 13e which differs from the embodiment shown in Figure 6 in the design of the microfluidic chip 27.

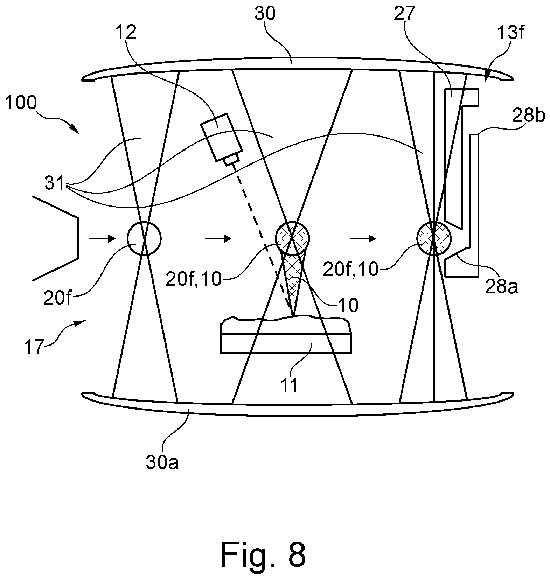

Figure 8 shows a seventh embodiment of a catching device 13f which comprises a transducer 30 with e reflector 30a for generating a field of standing ultrasonic waves 31. A liquid volume 20f in the form a free droplet is brought into the sampling zone and moved by means of the standing waves which are generated by the transducer 30 such that they move the droplet over the sample tissue 10 to catch the tissue sample 11 extracted by the laser device 12 and move the liquid volume 20f together with the tissue sample 10 towards an inlet of a microfluidic chip 27 where the tissue sample 10 is prepared and provided to further analysis at an interface at the outlet 28b of the microfluidic chip 27. Here, at least the laser device 12 may be moved relative to the tissue 11 during the sample process to sample the region of interest.

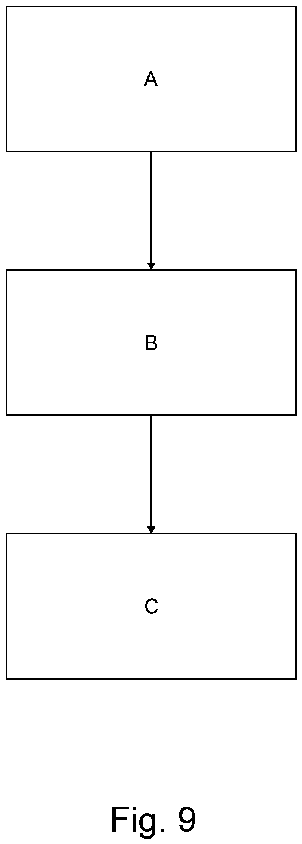

Figure 9 shows a flow diagram of method steps for performing tissue sampling using the system 100. In a first step A the biological tissue sample 10 is extracted from the biological tissue 11 using the laser device 12. The extracted tissue sample 10 is then caught by the catching device 13a-13f in a next method step B. The catching device 13a-13f provides a liquid volume 20a-20f in which the tissue sample 10 is condensed or dissolved. Subsequently, the tissue sample 10 condensed or dissolved in the liquid volume 20-20f is provided to the preparation device 14 and/or the analysis device 16 in method step C.

### List of reference signs

- 100: system

- 10: biological tissue sample
- 11: biological tissue
- 12: laser device
- 13a, b, c: catching device
- 14: preparation device
- 15: imaging device
- 16: analysis device
- 17: sampling zone
- 18: stage
- 19: holder element

- 20a-20f: liquid volume
- 21: vacuum pump
- 22a: liquid reservoir
- 23: pumping element
- 24: filter
- 25: chamber
- 26: carrier
- 27: microfluidic chip
- 28a, b: inlet and outlet
- 29: ejector

- 30: transducer
- 30a: reflector
- 31: standing ultrasonic wave

- A, B, C: Method steps

## Claims

1. System (100) for sampling of biological tissue (11), which is in particular part of an intact organism, comprising a laser device (12) for extracting a biological tissue sample (10) from the biological tissue (11), in particular in the form of an aerosol, and comprising a catching device (13a-13f) for catching the biological tissue sample (10) extracted by the laser device (12) and providing the biological tissue sample (10) to a preparation device (14) and/or an analysis device (16), wherein the catching device (13a-13f) is configured to provide a liquid volume (20a-20f) or a volume of a frozen liquid for condensing or dissolving the biological tissue sample (10) on or in the liquid volume (20a-20f) or the volume of the frozen liquid.

2. System (100) of claim 1, wherein the system (100) comprises a sample preparation device (14) coupled to the catching device (13a13f) for preparing the biological tissue sample (10), wherein the sample preparation device (14) comprises a microfluidic chip.

3. System (100) of one of the preceding claims, wherein the laser device (12) comprises an infrared laser, in particular a NIRL (nanosecond infrared laser), a PIRL (picosecond infrared laser) or a UV (ultra violet) laser, in particular with a wavelength less than 200 nm.

4. System (100) of one of the preceding claims, wherein the laser device (12) is configured such that the biological tissue sample (10) is extracted in the form of an aerosol.

5. System (100) of one of the preceding claims, wherein the liquid volume (20a, 20b, 20c) is at least one droplet or a liquid reservoir.

6. System (100) of one of the preceding claims, wherein the liquid volume (20a, 20b, 20c) is at least one droplet and wherein the catching device (12) is configured to move the droplet through a sampling zone (17) of the system (100), wherein the droplet is preferably moved in a direction essentially parallel to a surface of the biological tissue and/or in a direction perpendicular to the direction of a laser beam of the laser device (12).

7. System (100) of claim 5, wherein the catching device (12) is configured to position the droplet essentially stationarily in a sampling zone (17) of the system (100), wherein the catching device (12) is preferably configured to position the droplet in the sampling zone (17) by means of ultrasonic waves.

8. System (100) of claim 5, wherein the droplet is provided such that the droplet is hanging from a holding element (19), in particular a syringe needle, capillary, tubing, or pipet-tip like element.

9. System (100) of one of claims 1 to 4, wherein the liquid volume (20a-20f) is held or received in a liquid reservoir, in particular a sponge-like element, wherein the liquid reservoir is preferably arranged in a preparation device (14) or an analysis device (16).

10. System (100) of one of claim 5 to 9, wherein the catching device (13a-13f) is configured to move the liquid volume (20a-20f) to an opening of a preparation device (14) or an analysis device (16).

11. System (100) of one of claims 1 to 4, comprising a catching zone for catching and freezing the biological tissue sample (10), wherein the system (100) is configured to provide the liquid volume (20a-20f) in the catching zone to dissolve the biological tissue sample (10) in the liquid volume (20a-20f).

12. System (100) of one of the preceding claims, comprising an imaging system (15), in particular 3D-imaging system, for aligning the system (100) relative to the biological tissue (10) to be sampled and/or for controlling the movement of the laser device (12) and/or controlling and/or documenting the success of tissue ablation.

13. System (100) of one of the preceding claims, wherein the laser device (12) is configured to emit laser pulses and wherein the catching device (13a-13f) is synchronized with the laser device (12) such that one liquid volume (20a, 20b, 20c) may be provided for each laser pulse.

14. Method for sampling of biological tissue (11) using a system (100) according to one of the preceding claims, comprising the steps of:
- Extracting (A) the biological tissue sample (10) from the biological tissue (11) using the laser device (12),
- Catching (B) the biological tissue sample (10) by means of the catching device (13a-13f), and
- providing (C) the biological tissue sample (10) to the preparation device (14) and/or the analysis device (16).

15. Biological tissue sample (10) obtained by the method of claim 14.
